# EUROPEAN PATENT SPECIFICATION

(11) **EP 4 002 309 B1**
(45) Date of publication and mention of the grant of the patent: **03.06.2026**
(21) Application number: 20208239.2
(22) Date of filing: 17.11.2020
(51) Int. Cl.: B62D 1/00, B62D 15/02, G05D 1/00, G07C 9/00, H04W 4/02, H04W 4/40, H04W 4/80

(54) **COMPUTER PROGRAM, PERSONAL COMMUNICATIONS DEVICE, METHOD FOR A PERSONAL COMMUNI-CATIONS DEVICE, APPARATUS FOR A VEHICLE, AND METHOD FOR A VEHICLE**
COMPUTERPROGRAMM, PERSÖNLICHE KOMMUNIKATIONSVORRICHTUNG, VERFAHREN FÜR EINE PERSÖNLICHE KOMMUNIKATIONSVORRICHTUNG, VORRICHTUNG FÜR EIN FAHRZEUG UND VERFAHREN FÜR EIN FAHRZEUG
PROGRAMME INFORMATIQUE, DISPOSITIF DE COMMUNICATION PERSONNEL, PROCÉDÉ POUR UN DISPOSITIF DE COMMUNICATION PERSONNEL, APPAREIL POUR UN VÉHICULE ET PROCÉDÉ POUR UN VÉHICULE

(43) Date of publication of application: 25.05.2022
(73) Proprietor: Bayerische Motoren Werke Aktiengesellschaft, 80809 München (DE)
(72) Inventor: Mourad, Alaa, 80995 München (DE); Knobloch, Daniel, 80637 München (DE); Diewald, Stefan, 85368 Moosburg a. d. Isar (DE); Mueller, Olaf, 82275 Emmering (DE); Knott, Thorsten, 83607 Holzkirchen (DE)

(56) References cited:
- US-A1- 2010 075 656
- US-A1- 2017 111 487
- US-A1- 2020 090 437
- US-A1- 2020 307 555
- US-B1- 10 803 687

## Description

Embodiments of the present disclosure relate to a computer program, a personal communications device, a method for a personal communications device, an apparatus for a vehicle, and a method for a vehicle. In particular, embodiments relate to a concept for communication between a personal communications device and a vehicle.

Concepts for wireless control of vehicle functions are becoming increasingly important in the field of automotive engineering. In particular, it is desired that functions or applications of vehicles can be controlled by personal communications devices, thereby replacing keys and/or key fobs. To this end, existing concepts provide for one or more communication links between the mobile phone and a vehicle for each function or application. Each of the communication link demands resources, e.g., energy, hardware, computation power, etc.

Hence, there is a demand for an improved concept for communication between a personal communications device and a vehicle.

Document US 2017/0111487 A1 proposes a method for external use of a device having a Wireless communication interface by a program of a mobile device. External use is possible only when a key device serving as an authentication token communicates with the program.

Document US 2020/0307555 A1 proposes a method and an apparatus for key fob utilization for vehicle remote park-assist. An example vehicle system for remote park-assist (RePA) includes a key fob. The key fob includes a low frequency (LF) antenna to receive a beacon and an ultra-high frequency (UHF) antenna to transmit a return signal including a distance indicator and a RePA signal. The example vehicle system also includes a vehicle. The vehicle includes an LP module to transmit the beacon at a predefined interval, a receiver-transceiver module to receive the return signal and the RePA signal, a controller to enable RePAresponsive to determining that the distance indicator is less than a tethering threshold distance, and an autonomy unit to perform RePA based on the RePA signal.

Document US 2020/0090437 A1 proposes a vehicle entry system that comprises a portable terminal and an onboard device that Wirelessly communicates with the portable terminal. The onboard device has: a door opening and closing unit that can lock a vehicle door in a closed state and open the vehicle door to a prescribed angle; and an onboard control unit that, on the basis of commands from a portable terminal, controls a vehicle drive system and the door opening and closing unit. The portable terminal has a touch panel and a terminal control unit that outputs commands to the onboard control unit. A plurality of icons on the touch panel include an advance-and-open-door icon to advance to a location at which the door can open and, after advancing, to open the door; and a reverse-and-open-door icon to reverse to a location at which the door can open and, after reversing, to open the door.

Document US 10, 803,687 B1 describes a system implemented in a vehicle, the system comprises a sensing module, a zone determination module, and an intent determination module. The sensing module is configured to sense a signal from a mobile device proximate to the vehicle. The zone determination module is configured to determine locations of the mobile device in a plurality of zones around the vehicle based on the signal. A sequence of the locations indicates movement of the mobile device in the plurality of zones. The intent determination module is configured to select weights according to a set of rules to apply to successive locations in the sequence, determine an intent indicator of whether a person carrying the mobile device intends to enter the vehicle by applying the selected weights to the successive locations in the sequence, and generate an output to perform one or more operations in the vehicle based on the intent indicator.

This demand may be satisfied by the subj ect-matter of the appended independent and dependent claims.

Embodiments provide a method according to claim 1 for a vehicle and for communicating with a personal communications device. The method comprises establishing a secured communication link between the vehicle and the personal communications device for accessing and/or starting the vehicle. The method further comprises reusing the secured communication link for an application of the vehicle additional to accessing and/or starting the vehicle. This allows a more efficient use of the secured communication link and may make further communication links for the application superfluous. Also, the method enables (further) integration of the personal communications device in functionalities of the vehicle and, thus, may allow to replace a (traditional) key or key fob of the vehicle for at least some functionalities by the personal communications device. The personal communications device, e.g., is a smartphone, a tablet, a computer, or a wearable like a so-called smartwatch. The application, e.g., comprises one or more functions of the vehicle such as remote control parking (RCP) and/or one or more functions of the vehicle (e.g. pre-heating) and/or of an infotainment system (e.g. applying predefined settings for the infotainment system or providing information on the vehicle, e.g. on a fuel level, tire pressure, and/or errors, to the personal communications device) of the vehicle. The application particularly may be a (original equipment manufacturer, OEM, specific) "third party application".

In some embodiments, reusing the secured communication link comprises using the secured communication link for receiving one or more instructions from the personal communications device for the application. The one or more instructions, e.g., may cause the vehicle to execute a function of the vehicle. Thus, the vehicle can be operated by the personal communications device.

According to the invention, reusing the secured communication link comprises reusing the secured communication link for maneuvering the vehicle using the personal communications device. In this way, the vehicle can be moved by the personal communications device, e.g., for parking the vehicle from remote using the personal communications device.

In some embodiments, the secured communication link comprises at least one of a Bluetooth low energy (BLE) link. Compared to other wireless technologies, BLE may offer a lower energy consumption and/or a larger range.

According to the invention, the method further comprises determining a relative position and/or distance of the personal communications device with respect to the vehicle for accessing and/or starting to the vehicle based on the relative position and/or the distance. The method further comprises reusing the relative position and/or the distance for the application. For example, access is granted (e.g. doors of the vehicle are unlocked) and/or one can start the vehicle if the relative position and/or the distance is within a predetermined range. Otherwise, access may be refused (e.g. the doors may remain locked) and/or it is not allowed to start the vehicle. A skilled person having benefit from the present disclosure will appreciate that the relative position and/or the distance may be also used in other applications, e.g., for initiating measures to prepare for departure and/or for navigating a user to the vehicle or vice versa. This may allow a more efficient use of the determined relative position and/or the distance.

In some embodiments, determining the relative position and/or distance of the personal communications device comprises determining the relative position and/or distance of the personal communications device using ultra-wideband localization (UWB). A skilled person will understand that UWB enables a more secure localization than using other technologies, e.g. using two-way ranging in a wireless network.

In some embodiments, reusing the relative position and/or the distance comprises maneuvering the vehicle using the personal communications device and based on the relative position and/or the distance. Maneuvering the vehicle, e.g., is only allowed if the relative position and/or the distance is within a predefined range for an enhanced safety of the environment and/or the user maneuvering the vehicle.

Embodiments further provide a method for a personal communications device and for communicating with a vehicle. The method comprises establishing a secured communication link between the vehicle and the personal communications device for accessing and/or starting the vehicle. Also, the method comprises reusing the secured communication link for an application of the vehicle additional to accessing and/or starting the vehicle. This allows a more efficient use of the secured communication link and may make further communication links for the application superfluous. The skilled person having benefit from the present disclosure will appreciate that the method for the personal communications device may interact in communication systems with the aforementioned method for the vehicle.

It is noted that explanations made in connection with the method for the vehicle may also apply to the method for the personal communications device.

Further embodiments provide an apparatus according to claim 8 for a vehicle. The apparatus comprises one or more interfaces for communicating with a personal communications device and a data processing circuit configured to carry out one of the proposed methods for the vehicle. In particular, the apparatus may be installed on the vehicle.

Further embodiments provide a vehicle according to claim 9 comprising the apparatus according to claim 8 proposed herein.

Also, embodiments provide a personal communications device which comprises one or more interfaces for communicating with a vehicle and a data processing circuit configured to carry out the method for the personal communications device.

The personal communications device, e.g., is a mobile device or a wearable device.

Further embodiments provide a computer program according to claim 10.

Some embodiments of the present disclosure will be described in the following by way of example only, and with reference to the accompanying figures, in which
Fig. 1 illustrates a flow chart schematically illustrating an embodiment of a method for a vehicle and for communicating with a personal communications device;
Fig. 2 illustrates a block diagram schematically illustrating an embodiment of an apparatus for a vehicle;
Fig. 3 illustrates a flow chart schematically illustrating an embodiment of a method for a personal communications device and for communicating with a vehicle;
Fig. 4 illustrates a block diagram schematically illustrating an embodiment of a personal communications device; and
Fig. 5 schematically illustrates a block diagram schematically illustrating an exemplary implementation of the proposed concept.

Some examples are now described in more detail with reference to the enclosed figures. However, other possible examples are not limited to the features of these embodiments described in detail.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Keyless access/go systems using a smart device are becoming increasingly important in the field of automotive engineering. Also, users demand integration of their personal communications devices into applications/functions of their vehicles to control electronic systems (e.g. infotainment system, heating, seat adjustment, etc.) of the vehicles. To this end, existing concepts provide for one or more communication links between the mobile phone and a vehicle for each function or application at the cost of resources for each communication link.

Hence, there is a demand for an improved concept for communication between a personal communications device and a vehicle. This demand may be satisfied by embodiments described below.

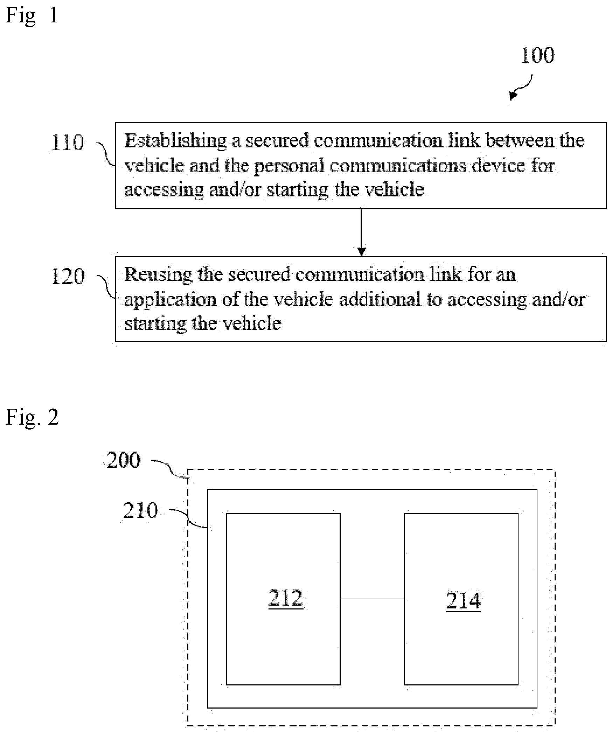

Fig. 1 illustrates a flow chart schematically illustrating an embodiment of a method 100 for a vehicle and for communicating with a personal communications device.

As can be seen from Fig. 1, method 100 comprises establishing 110 a secured communication link between the vehicle and the personal communications device for accessing and/or starting the vehicle. Establishing 110 the secured communication link may comprise activating a Bluetooth functionality, identifying the personal communications device, and/or sending or responding to a request for establishing the secured communication link to the personal communications device.

Also, method 100 comprises reusing 120 the secured communication link for an application of the vehicle additional to accessing and/or starting the vehicle. Hence, the secured communication link may be used for both the application and for accessing and/or starting the vehicle. Thus, the communication link for accessing and/or starting the vehicle is efficiently reused for the application for the benefit of a lower resource demand as with an additional separate communication link for the application. The skilled person having benefit from the present disclosure will appreciate that reusing 120 the secured communication link may comprise reusing the secured communication link for a plurality of applications.

The secured communication link, e.g., is used for so-called "keyless access" and/ or for "keyless go" enabling a user to access and/or start the vehicle using the personal communications device and/or if the personal communications device is within a predefined range with respect to the vehicle. To this end, a relative position and/or a distance of the personal communications device with respect to the vehicle may be determined, as laid out in more detail later.

The secured communication link can be understood as a communication path or connection for either uni- or bidirectional communication. Hence, the secured communication link may serve as both uplink and downlink. The secured communication link may comprise one or more channels having different frequencies or frequency ranges. The secured communication link, e.g., is secured in the sense of less insecure against interference (e.g. a relay station attack, RSA) in the communication link due to one or more security measures. A skilled person will understand that security measures for the secured communication link, e.g., comprise cryptographic techniques (e.g. Diffie-Hellman key exchange) and/or detecting such interference by measuring a group delay time, third-order intercept point, field strength, and/or a response time of a 125 kHz resonant circuit. In this way, the use of the vehicle of and access to the vehicle by unauthorized persons can be prevented. Accordingly, the secured communication link advantageously allows a secure operation of the application using the personal communications device. In particular, the secured communication link comprises a wireless communication link such as a Bluetooth low energy (BLE) link. The skilled person will understand that BLE on the one hand may demand less resources (e.g. costs and/or energy) than other wireless communication techniques (e.g. cellular mobile radio) and on the other hand allows to efficiently reuse means for communication via BLE with the personal communications device for localizing the personal communications device. The skilled person will also understand that alternatively or additionally various (other) means, protocols, and/or technologies (e.g. including 802.11, 3GPP systems) can be used for the implementation of method 100.

Reusing 120 the secured communication link may comprise reusing same means of communication. Hence, reusing 120 the secured communication link may comprise using the same physical data link, protocol, router, and/or the same channel (e.g. the same bandwidth or radio frequency). In this way, less or no additional hardware components, energy, and/or computational power may be necessary to carry out/operate the application using the personal communications device.

The application, e.g., involves one or more functions of the vehicle like remote control parking (RCP), (pre-) heating, seat adjustments, and/or functions of an infotainment system. Hence, reusing 120 the secured communication link comprises maneuvering the vehicle for RCP and/or controlling/adjusting the heating and/or one or more seats of the vehicle, e.g., to prepare the vehicle for departure when a driver approaches the vehicle.

For RCP and/or other applications, reusing 120 the secured communication link also comprises using the secured communication link for receiving one or more instructions from the personal communications device for the application. The instructions, e.g., comprise one or more messages which navigate the vehicle (e.g. for RCP) and/or cause the vehicle to perform/execute one or more (other) functions of the vehicle, e.g., turn on the heating or adjust the seat.

Reusing 120 the secured communication link comprises reusing the secured communication link for maneuvering the vehicle using the personal communications device. The personal communications device serves as a remote control and enables the user to move and navigate the vehicle through one or more inputs to the personal communications device. Thus, the user can accelerate, brake, and/or steer the vehicle, e.g., for RCP:
Method 100 also comprises determining a relative position and/or distance of the personal communications device with respect to the vehicle and for accessing and/or starting the vehicle based on the relative position and/or the distance. As mentioned before, the secured communication link is reused for determining the relative position and/or the distance, e.g. using the BLE for accessing and/or for starting, for the application and/or for determining the relative position and/or the distance, for the benefit of less required resources. Other separate means (e.g. ultra-wideband, UWB, and/or global positioning system, GPS) are used for determining the relative position and/or the distance. The relative position and/or the distance, e.g., are used for accessing and/or starting the vehicle in a way that the vehicle only allows to access and/or start the vehicle if the relative position and/or the distance indicates that the user is within a predefined range and disallows to access and/or start the vehicle if the relative position and/or the distance indicates that the user is outside the predefined range. The skilled person having benefit from the present disclosure will appreciate that UWB enables a secure localization, i.e. a secure way to determine the relative position and/or the distance.

Method 100 also comprises reusing the relative position and/or the distance for the application. Reusing the relative position and/or the distance, e.g., comprises preparing the vehicle for departure if the relative position and/or the distance indicates that the user approaches and/or is within another predetermined range.

Reusing the relative position and/or the distance comprises maneuvering the vehicle using the personal communications device and based on the relative position and/or the distance. For security reasons, the personal communications device, e.g., is only enabled to maneuver the vehicle if the relative position and/or the distance indicates that the user is closer to the vehicle than a predefined upper limit for the distance and further away from the vehicle than a predefined lower limit for the distance.

Method 100 can be performed by an apparatus as described below.

Fig. 2 illustrates a block diagram schematically illustrating an embodiment of an apparatus 210 for a vehicle.

As indicated by dashed lines in Fig. 2, the apparatus 210 may optionally be installed on a vehicle 200.

The apparatus 210 comprises one or more interfaces 212 for communicating with a personal communications device and a data processing circuit 214 which is configured to carry out method 200 (or embodiments thereof).

The one or more interfaces 212 may comprise or correspond to any means for establishing 110 and reusing 120 the secured communication link under control of the data processing circuit 214. In embodiments, the one or more interfaces 212 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 212 may comprise further components to enable according communication with the personal communications device. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 212 may be coupled to one or more antennas, which may correspond to any transmit and/or receive antennas, such as horn antennas, dipole antennas, patch antennas, sector antennas etc. In particular, the one or more interfaces 212 may comprise at least one of a BLE interface (i.e. means for communication via BLE) for communication with the personal communications device via BLE, i.e. to receive information and/or one or more instructions from and transmit information and/or one or more instructions to the personal communications device.

As shown in Fig. 2 the respective one or more interfaces 212 are coupled to the data processing circuit 214 of the apparatus 210. The data processing circuit 214 may be implemented using one or more processing units, one or more processing devices, any means for processing, such as a processor, a computer or a programmable hardware component being operable with accordingly adapted software. In other words, the described functions of the data processing circuit 214 may as well be implemented in software, which is then executed on one or more programmable hardware components. Such hardware components may comprise a general-purpose processor, a Digital Signal Processor (DSP), a micro-controller, and/or the like. The skilled person having benefit from the present disclosure will understand that the data processing circuit 214 and the one or more interfaces 212 thus may be implemented such that the data processing circuit 214 and the one or more interfaces 212 are suitable to execute method 100.

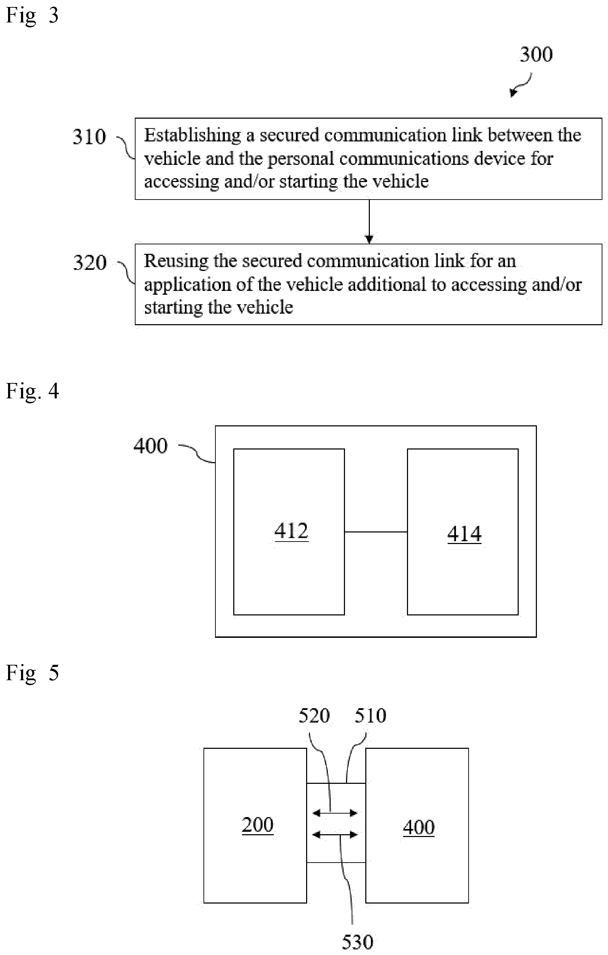

Fig. 3 illustrates a flow chart schematically illustrating an embodiment of a method 300 for a personal communications device and for communicating with a vehicle. The method comprises establishing 310 a secured communication link between the vehicle and the personal communications device for accessing and/or starting the vehicle. Establishing 110 the secured communication link may comprise activating a Bluetooth functionality, identifying the vehicle, and/or sending or responding to a request for establishing the secured communication link to the vehicle.

For accessing and/or starting the vehicle, the personal communications device may transmit one or more suitable instructions and/or credentials for authentication to the vehicle.

Method 300 further comprises reusing 320 the secured communication link for an application of the vehicle additional to accessing and/or starting the vehicle. As mentioned above in connection with method 100, thus, the communication link for accessing and/or starting the vehicle is efficiently reused for the application for the benefit of a lower resource demand as with an additional separate communication link for the application. Further, method 300 enables the personal communications device to replace the key and/or key fob of the vehicle for at least some functionalities (e.g. keyless access, keyless go, infotainment services/applications).

Method 300 may further comprise determining the relative position and/or the distance with respect to the vehicle to provide the relative position and/ or the distance for further functionalities, as already described above. In order to do so, the personal communications device may use GPS and/or other positioning means, technologies, and/or techniques.

It is noted that functionalities described in connection with method 100 can be also applied to method 300, as can explanations of similarly named features.

Method 300, e.g., can be executed by a personal communications device, as described hereafter.

Fig. 4 illustrates a block diagram schematically illustrating an embodiment of a personal communications device 400. The personal communications device 400 comprises one or more interfaces 412 for communicating with a vehicle and a data processing circuit 414 which is configured to carry out method 300.

The one or more interfaces 412 may comprise or correspond to any means for establishing 110 and reusing 120 the secured communication link under control of the data processing circuit 214. In embodiments, the one or more interfaces 412 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 412 may comprise further components to enable according communication with the vehicle. Such components may include transceiver (transmitter and/or receiver) components, such as one or more LNAs, one or more PAs, one or more duplexers, one or more diplexers, one or more filters or filter circuitry, one or more converters, one or more mixers, accordingly adapted radio frequency components, and the like. The one or more interfaces 412 may be coupled to one or more antennas, which may correspond to any transmit and/or receive antennas, such as horn antennas, dipole antennas, patch antennas, sector antennas etc. In particular, the one or more interfaces 412 may comprise at least one BLE interface for communication with the vehicle via BLE, i.e. to receive information and/or one or more instructions from and transmit information and/or one or more instructions to the vehicle.

As shown in Fig. 4 the respective one or more interfaces 412 are coupled to the data processing circuit 414 of the personal communications device 410. The data processing circuit 414 may be implemented using one or more processing units, one or more processing devices, any means for processing, such as a processor, a computer or a programmable hardware component being operable with accordingly adapted software. In other words, the described functions of the data processing circuit 414 may as well be implemented in software, which is then executed on one or more programmable hardware components. Such hardware components may comprise a general-purpose processor, a Digital Signal Processor (DSP), a micro-controller, and/or the like. The skilled person having benefit from the present disclosure will understand that the data processing circuit 414 and the one or more interfaces 414 thus may be implemented such that the data processing circuit 414 and the one or more interfaces 414 are suitable to execute method 300.

The personal communications device 400, e.g., a mobile device or a wearable device. In embodiments, the personal communications device 400 is comprised in or corresponds to a cell/mobile phone, a so-called "tablet", a personal computer, a so-called "smartwatch", or any other consumer electronics device for communication.

In implementations of the proposed concept, the methods 100 and 300 as well as the apparatuses 200 and the personal communications device 400 may interoperate, as explained below.

Fig. 5 schematically illustrates a block diagram schematically illustrating an exemplary implementation of the proposed concept.

In the illustrated implementation, a vehicle (e.g. vehicle 200) and a personal communications device (e.g. personal communications device 400) establish a secured communication link 510, e.g., using BLE. In order to do so, the vehicle 200 and the personal communications device 400 may exchange a request and a response for establishing 110 and 310 the secured communication link 510.

As can be seen from Fig. 5, the secured communication link 510 may be used for communication 520 for a keyless access and/or a keyless go system, i.e. for accessing and/or starting the vehicle 200. For this, the vehicle 200 and the personal communications device 400 may communicate information (e.g. for authentication of the personal communications device 400) from the personal communications device 400 to the vehicle 200 and/or vice versa. Accordingly, the vehicle 200 and the personal communications device 400 may be equipped with suitable receivers, transmitters, and/or transceivers for communicating via the secured communication link 510 using BLE.

The personal communications device 400 and the vehicle 200 further reuse the secured communication link 510 for communication 530 in connection with the application (RPC, etc.). In order to do so, the vehicle 200 and the personal communications device 400 may also reuse the receivers/s, transmitter/s, and/or transceiver/s used for the communication 520 and the keyless access and/or the keyless go system, i.e. for accessing and/or starting the vehicle 200.

Optionally, the vehicle 200 is equipped with a UWB localization system for localizing the user based on the relative position and/or the distance of the personal communications device 400. Accordingly, the personal communication device 400 may be equipped such that the UWB localization system is able to determine the relative position and/or the distance of the personal communication device 400. Thus, the vehicle 200 may determine the relative position and/or the distance of the personal communications device 400 with respect to the vehicle 200 using UWB. As mentioned above, the vehicle 200 can use the relative position and/or the distance in the keyless access system and/or the keyless go system, but also for the application, e.g. for RCP.

In this way, the personal communications device 400 (e.g. smartphone, tablet, smartwatch, computer, etc.) may replace traditional keys and/or key fobs of the vehicle 200 in accessing and/or starting the vehicle 200 and may further serve the use of the application and the localization of the user, thereby enhancing a usability of the personal communications device 400 and the vehicle 200.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. A method (100) for a vehicle (200) and for communicating with a personal communications device (400), the method (100) comprising:
establishing (110) a secured communication link (510) between the vehicle (200) and the personal communications device (400) for accessing and/or starting the vehicle (200); and
reusing (120) the secured communication link (510) for an application of the vehicle (200) additional to accessing and/or starting the vehicle (200),
wherein reusing the secured communication link comprises reusing the secured communication link for maneuvering the vehicle using the personal communications device, and
reusing the secured communication link for determining a relative position and/or distance between the personal communications device and the vehicle for accessing and/or starting the vehicle (200), wherein the relative position and/or the distance are used for accessing and/or starting the vehicle in a way that the vehicle only allows to access and/or start the vehicle if the relative position and/or the distance indicates that the personal communications device is within a predefined range and disallows to access and/or start the vehicle if the relative position and/or the distance indicates that the personal communications device is outside the predefined range, **characterized in that** the personal communications device is only enabled to maneuver the vehicle if the relative position and/or the distance indicates that the personal communications device is closer to the vehicle than a predefined upper limit for the distance and further away from the vehicle than a predefined lower limit for the distance.

2. The method (100) of claim 1, wherein reusing (120) the secured communication link (510) comprises using the secured communication link (510) for receiving one or more instructions from the personal communications device (400) for the application.

3. The method (100) of claim 1 or 2, wherein reusing (120) the secured communication link (510) comprises reusing the secured communication link (510) for maneuvering the vehicle (200) using the personal communications device (400).

4. The method (100) of any one of the preceding claims, wherein the secured communication link (510) comprises at least one of a Bluetooth low energy, BLE, link.

5. The method (100) of any one of the preceding claims, wherein the method (100) further comprises:
reusing the relative position and/or the distance for the application.

6. The method (100) of claim 5, wherein determining the relative position and/or distance of the personal communications device (400) comprises determining the relative position and/or distance of the personal communications device (400) using ultra-wideband localization.

7. The method (100) of claims 3 and 5, wherein reusing the relative position and/or the distance comprises maneuvering the vehicle (200) using the personal communications device (400) and based on the relative position and/or the distance.

8. An apparatus (210) for a vehicle (200), the apparatus (210) comprising:
one or more interfaces (212) for communicating with a personal communications device (400); and
a data processing circuit (214) configured to carry out one of the methods (100) of claims 1 to 7.

9. A vehicle (200) comprising the apparatus (210) of claim 8.

10. A computer program having a program code configured to cause an apparatus according to claim 8 to perform one of the methods (100, 300) according to one of the claims 1 to 7, when the computer program is executed on an apparatus according to claim 8.

## Patentansprüche

1. Verfahren (100) für ein Fahrzeug (200) und zum Kommunizieren mit einem persönlichen Kommunikationsgerät (400), wobei das Verfahren (100) umfasst:
Herstellen (110) einer gesicherten Kommunikationsverbindung (510) zwischen dem Fahrzeug (200) und dem persönlichen Kommunikationsgerät (400) zum Zugreifen auf und/oder Starten des Fahrzeugs (200); und
Wiederverwenden (120) der gesicherten Kommunikationsverbindung (510) für eine Anwendung des Fahrzeugs (200) zusätzlich zum Zugreifen auf und/oder Starten des Fahrzeugs (200),
wobei das Wiederverwenden der gesicherten Kommunikationsverbindung das Wiederverwenden der gesicherten Kommunikationsverbindung zum Manövrieren des Fahrzeugs unter Verwendung des persönlichen Kommunikationsgeräts umfasst, und
das Wiederverwenden der gesicherten Kommunikationsverbindung zum Bestimmen einer relativen Position und/oder Distanz zwischen dem persönlichen Kommunikationsgerät und
dem Fahrzeug zum Zugreifen auf und/oder Starten des Fahrzeugs (200), wobei die relative Position und/oder die Distanz zum Zugreifen auf und/oder Starten des Fahrzeugs derart verwendet werden, dass das Fahrzeug nur erlaubt, auf das Fahrzeug zuzugreifen und/oder das Fahrzeug zu starten, wenn die relative Position und/oder die Distanz anzeigt, dass sich das persönliche Kommunikationsgerät innerhalb eines vordefinierten Bereichs befindet, und
nicht erlaubt, auf das Fahrzeug zuzugreifen und/oder das Fahrzeug zu starten, wenn die relative Position und/oder die Distanz anzeigt, dass sich das persönliche Kommunikationsgerät außerhalb des vordefinierten Bereichs befindet, **dadurch gekennzeichnet, dass** das persönliche Kommunikationsgerät nur zum Manövrieren des Fahrzeugs befähigt ist, wenn die relative Position und/oder die Distanz anzeigt, dass sich das persönliche Kommunikationsgerät näher am Fahrzeug als eine vordefinierte obere Grenze für die Distanz und weiter vom Fahrzeug entfernt als eine vordefinierte untere Grenze für die Distanz befindet.

2. Verfahren (100) nach Anspruch 1, wobei das Wiederverwenden (120) der gesicherten Kommunikationsverbindung (510) das Verwenden der gesicherten Kommunikationsverbindung (510) zum Empfangen einer oder mehrerer Instruktionen von dem persönlichen Kommunikationsgerät (400) für die Anwendung umfasst.

3. Verfahren (100) nach Anspruch 1 oder 2, wobei das Wiederverwenden (120) der gesicherten Kommunikationsverbindung (510) das Wiederverwenden der gesicherten Kommunikationsverbindung (510) zum Manövrieren des Fahrzeugs (200) unter Verwendung des persönlichen Kommunikationsgeräts (400) umfasst.

4. Verfahren (100) nach einem der vorhergehenden Ansprüche, wobei die gesicherte Kommunikationsverbindung (510) mindestens eine Bluetooth Low Energy, BLE, Verbindung umfasst.

5. Verfahren (100) nach einem der vorhergehenden Ansprüche, wobei das Verfahren (100) ferner umfasst:
Wiederverwenden der relativen Position und/oder der Distanz für die Anwendung.

6. Verfahren (100) nach Anspruch 5, wobei das Bestimmen der relativen Position und/oder Distanz des persönlichen Kommunikationsgeräts (400) das Bestimmen der relativen Position und/oder Distanz des persönlichen Kommunikationsgeräts (400) unter Verwendung von Ultrabreitband-Lokalisierung umfasst.

7. Verfahren (100) nach den Ansprüchen 3 und 5, wobei das Wiederverwenden der relativen Position und/oder der Distanz das Manövrieren des Fahrzeugs (200) unter Verwendung des persönlichen Kommunikationsgeräts (400) und basierend auf der relativen Position und/oder der Distanz umfasst.

8. Vorrichtung (210) für ein Fahrzeug (200), wobei die Vorrichtung (210) umfasst:
eine oder mehrere Schnittstellen (212) zum Kommunizieren mit einem persönlichen Kommunikationsgerät (400); und
eine Datenverarbeitungsschaltung (214), die konfiguriert ist, eines der Verfahren (100) nach den Ansprüchen 1 bis 7 auszuführen.

9. Fahrzeug (200), umfassend die Vorrichtung (210) nach Anspruch 8.

10. Computerprogramm mit einem Programmcode, der konfiguriert ist, eine Vorrichtung nach Anspruch 8 zu veranlassen, eines der Verfahren (100, 300) nach einem der Ansprüche 1 bis 7 durchzuführen, wenn das Computerprogramm auf einer Vorrichtung nach Anspruch 8 ausgeführt wird.

## Revendications

1. Procédé (100) pour un véhicule (200) et pour communiquer avec un dispositif de communication personnel (400), le procédé (100) comprenant :
l'établissement (110) d'une liaison de communication sécurisée (510) entre le véhicule (200) et le dispositif de communication personnel (400) pour accéder au véhicule (200) et/ou le démarrer ; et
la réutilisation (120) de la liaison de communication sécurisée (510) pour une application du véhicule (200) supplémentaire à l'accès au véhicule (200) et/ou au démarrage du véhicule (200),
dans lequel la réutilisation de la liaison de communication sécurisée comprend la réutilisation de la liaison de communication sécurisée pour manœuvrer le véhicule en utilisant le dispositif de communication personnel, et
la réutilisation de la liaison de communication sécurisée pour déterminer une position relative et/ou une distance entre le dispositif de communication personnel et le véhicule pour accéder au véhicule (200) et/ou le démarrer, dans lequel la position relative et/ou la distance sont utilisées pour accéder au véhicule et/ou le démarrer de manière que le véhicule autorise uniquement l'accès au véhicule et/ou le démarrage du véhicule si la position relative et/ou la distance indique que le dispositif de communication personnel se trouve dans une plage prédéfinie et n'autorise pas l'accès au véhicule et/ou le démarrage du véhicule si la position relative et/ou la distance indique que le dispositif de communication personnel se trouve en dehors de la plage prédéfinie, **caractérisé en ce que** le dispositif de communication personnel est uniquement habilité à manœuvrer le véhicule si la position relative et/ou la distance indique que le dispositif de communication personnel se trouve plus près du véhicule qu'une limite supérieure prédéfinie pour la distance et plus éloigné du véhicule qu'une limite inférieure prédéfinie pour la distance.

2. Procédé (100) selon la revendication 1, dans lequel la réutilisation (120) de la liaison de communication sécurisée (510) comprend l'utilisation de la liaison de communication sécurisée (510) pour recevoir une ou plusieurs instructions du dispositif de communication personnel (400) pour l'application.

3. Procédé (100) selon la revendication 1 ou 2, dans lequel la réutilisation (120) de la liaison de communication sécurisée (510) comprend la réutilisation de la liaison de communication sécurisée (510) pour manœuvrer le véhicule (200) en utilisant le dispositif de communication personnel (400).

4. Procédé (100) selon l'une quelconque des revendications précédentes, dans lequel la liaison de communication sécurisée (510) comprend au moins une liaison Bluetooth à basse énergie, BLE.

5. Procédé (100) selon l'une quelconque des revendications précédentes, dans lequel le procédé (100) comprend en outre :
la réutilisation de la position relative et/ou de la distance pour l'application.

6. Procédé (100) selon la revendication 5, dans lequel la détermination de la position relative et/ou de la distance du dispositif de communication personnel (400) comprend la détermination de la position relative et/ou de la distance du dispositif de communication personnel (400) en utilisant une localisation à bande ultralarge.

7. Procédé (100) selon les revendications 3 et 5, dans lequel la réutilisation de la position relative et/ou de la distance comprend la manœuvre du véhicule (200) en utilisant le dispositif de communication personnel (400) et sur la base de la position relative et/ou de la distance.

8. Appareil (210) pour un véhicule (200), l'appareil (210) comprenant :
une ou plusieurs interfaces (212) pour communiquer avec un dispositif de communication personnel (400) ; et
un circuit de traitement de données (214) configuré pour exécuter l'un des procédés (100) selon les revendications 1 à 7.

9. Véhicule (200) comprenant l'appareil (210) selon la revendication 8.

10. Programme informatique ayant un code de programme configuré pour amener un appareil selon la revendication 8 à exécuter l'un des procédés (100, 300) selon l'une des revendications 1 à 7, lorsque le programme informatique est exécuté sur un appareil selon la revendication 8.
